# EUROPEAN PATENT SPECIFICATION

(11) **EP 4 183 243 B1**
(45) Date of publication and mention of the grant of the patent: **11.09.2024**
(21) Application number: 22206024.6
(22) Date of filing: 08.11.2022
(51) Int. Cl.: A01D 75/18, A01D 75/20, G08G 1/16

(54) **AGRICULTURAL MACHINE FOR USE IN A FIELD**
LANDWIRTSCHAFTLICHE MASCHINE ZUR VERWENDUNG AUF EINEM FELD
MACHINE AGRICOLE DESTINÉE À ÊTRE UTILISÉE SUR UN TERRAIN

(30) Priority: 18.11.2021 NL 2029815
(43) Date of publication of application: 24.05.2023
(73) Proprietor: Lely Patent N.V., 3147 PB Maassluis (NL)
(72) Inventor: VAN DEN BERG, Karel, 3147 PB Maassluis (NL); LI, Yan, 3147 PB Maassluis (NL); TURK, Esra Neslihan, 3147 PB MAASSLUIS (NL)
(74) Representative: Octrooibureau Van der Lely N.V.

(56) References cited:
- EP-A1- 1 369 016
- EP-A2- 2 301 322
- DE-A1- 10 016 688
- DE-B4- 10 258 347
- ISRAEL MARTIN ET AL: "Detecting nests of lapwing birds with the aid of a small unmanned aerial vehicle with thermal camera", 2017 INTERNATIONAL CONFERENCE ON UNMANNED AIRCRAFT SYSTEMS (ICUAS), IEEE, 13 June 2017 (2017-06-13), pages 1199 - 1207, XP033131801, DOI: 10.1109/ICUAS.2017.7991393

## Description

The present invention relates to an agricultural machine for use in a field.

Such machines are widely known in the art. They are used for soil cultivation, planting, harvesting, hay making, etcetera. Generally, they are provided with propulsion and steering means for moving the machine over the field (with the aid of a driver or autonomously), a working unit for working the field (e.g. a mowing unit) and control means.

In a field, animals may build their nest, for example, a bird's nest or a hare's den. When an agricultural machine works the field, such nests run the risk of being damaged by the machine. To prevent this, it is known in the art to scan the field area in front of the agricultural machine by means of e.g. a camera in order to optically detect animal's nests and to take appropriate action to avoid damaging the nests. Also, infrared cameras have been used to detect such nests thermally.

The known techniques and machines have several drawbacks. The animals tend to try to hide in their nest, which renders an accurate detection difficult. In crop fields with e.g. high grass, the detection, both optical and thermal, is further complicated for obvious reasons. EP 2 301 322 A2 discloses an example of agricultural machine provided with means for sensing the position of a nest.

There is a need for an improved machine with cheap, yet effective means to detect animal's nests in the field and to avoid damaging these.

It is an object of the present invention to provide such an improved machine.

The invention achieves the object at least in part by means of a machine according to claim 1, in particular an agricultural machine for use in a field, the machine being provided with propulsion and steering means, a working unit and control means, said control means being connected to sensor means with analyzing means for monitoring the path to be followed by the machine, wherein the sensor means with analyzing means are configured to determine the position of an animal's nest in the field on or near the path to be followed by the machine by means of detecting an animal fleeing from the nest in the field and analyzing its fleeing trajectory, wherein the control means are configured to influence the machine, in response to the position of the animal's nest determined by the sensor means with analyzing means, in such a way that the animal's nest is not damaged.

In this way, a safe and animal-friendly machine is realized. The invention is based on the insight that the intelligent use of inexpensive sensor means with analyzing means enables an automatic, timely and accurate detection of animal's nests, making use of the tendency animals have, faced with danger, to stay in their nest as long as possible, in order to defend the nest, and fleeing only when the agricultural machine is already in the immediate vicinity of the nest, so that the fleeing trajectory of the animal can be readily detected and analyzed. The timely and accurate detection of animal's nests enables an efficient prevention of damage to these nests.

Suitable and advantageous embodiments are described in the dependent claims, as well as in the description below.

According to a first embodiment of the invention, the control means are configured to temporarily displace the working unit. This constitutes an efficient and user-friendly way of avoiding damage to the nest. For example, if the nest is located centrally in front of a machine with a mowing unit, the machine can move on without touching the nest when the mowing unit has been raised.

According to a further embodiment, the control means are configured to temporarily stop the working unit. This is a further simple, yet effective implementation. Certain agricultural machines can drive on without damaging the nest if the working unit is turned off, provided that the nest is not located exactly on the path to be followed by the wheels of the machine.

Advantageously, the control means are configured to stop the machine. A straightforward, but very safe solution. In this way, appropriate action can be taken, for example by a driver of the machine, after an alarm has been generated.

In a highly advantageous embodiment, the control means are configured to modify the path to be followed by the machine. Thus, damage to the nest is avoided in a completely automated way. This is not only very safe and animal-friendly, but also user-friendly and efficient.

According to a further embodiment, the machine is provided with warning means for animals on or near the path to be followed by the machine. In this way, the safety for the animals is further enhanced. The warning means can be acoustical, in the form of an alarm sound, or optical, like a flashing light, for example.

In yet another embodiment, the position of the animal's nest determined by the sensor means with analyzing means is stored in the control means. This is advantageous for future use. For example, the position may be taken into account for future runs of the agricultural machine in the same field.

In accordance with a further embodiment, the machine is provided with marking means for marking the position of the animal's nest determined by the sensor means with analyzing means in the field. This is a simple, yet efficient measure to ensure the future safety of the nest. The marking means may comprise e.g. a paint sprayer.

Advantageously, the sensor means with analyzing means are configured to determine which species of animal is fleeing. In this way, the action to be taken may be adapted to the animal species. For example, a heron does not make a nest in a field, so that in that case no action would be required.

In yet a further embodiment, the control means are configured to influence the machine in dependence on the animal species fleeing. This improves the efficiency and reliability of the machine.

The invention will now be further explained with reference to the following Figures, which schematically illustrate the machine according to the invention.

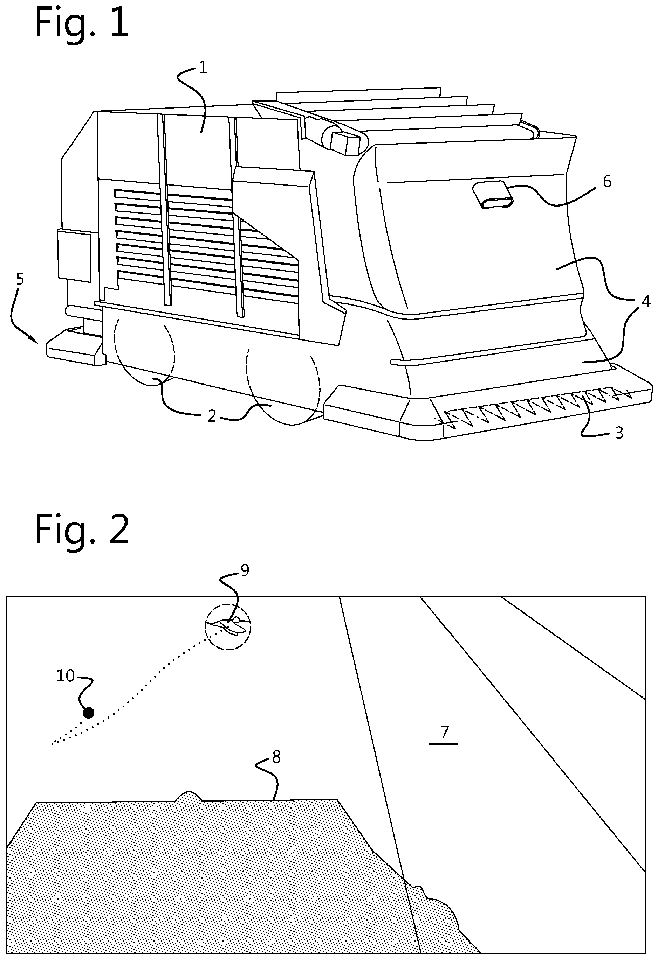

Figure 1 shows an example of a machine according to the invention; Figure 2 illustrates the analysis of the fleeing trajectory of a bird fleeing from its nest in a field.

In Figure 1 an example of a machine in accordance with the invention is depicted: a fully automated grass harvesting and feeding machine. Of course, the invention is not restricted to such a machine. It can be used on a plurality of agricultural machines, either driven by a driver or autonomous, such as mowers, rakes, weeders, etcetera.

The autonomous, unmanned device is a vehicle with a body 1 and wheels 2. The front side (in the drawing right) is provided with a working unit, in this case an automatic harvesting means, here shown schematically in the form of an automatic mowing device 3 positioned under a cover 4. Furthermore, under the cover 4 there are automatic loading means for conveying the harvested crop into a storage space inside the body 1. At the rear side (in the drawing left) there are provided means for automatically unloading and dosing feed at a feeding location, here shown as a side discharge 5. An antenna (not shown) on top of the body 1 may be provided for communication purposes.

Not shown are propulsion and steering means for the autonomous, unmanned device and a computer (or other control means) with the aid of which the autonomous, unmanned device is controlled and operated. This computer comprises i.a. a processor and navigation means. It can be included in the autonomous, unmanned device, but it can also be located elsewhere and communicate with the machine via an antenna.

The autonomous, unmanned device can move over a crop field, for example a grass field, following a path, under the control of the computer. When the autonomous, unmanned device has finished mowing the grass, or when a certain feed demand has been determined and harvested, the machine can move to a feeding location to deliver the freshly mowed grass to e.g. animals (such as cows) in a barn.

In accordance with the invention, the control means are connected to sensor means with analyzing means for monitoring the path to be followed by the machine. The sensor means are shown here as a camera 6 positioned centrally at the front of the body 1 of the machine, at a certain height.

The sensor means 6 are provided with or connected to analyzing means comprising a processor or a computer processing unit. The analyzing means can also be part of the control means. Together, they are configured to determine the position of an animal's nest in the field on or near the path to be followed by the machine by means of detecting an animal fleeing from the nest in the field and analyzing its fleeing trajectory, as will be elucidated below. The control means are configured to influence the machine, in response to the position of the animal's nest determined by the sensor means with analyzing means 6, in such a way that the animal's nest is not damaged.
In order to determine the position of an animal's nest by means of detecting and analyzing an animal's flying or running trajectory when fleeing from its nest, use can be made of image analysis and/or artificial intelligence techniques (known as such), such as machine learning or deep learning, e.g. using neural networks.

The machine is thus made safe and more animal-friendly. The intelligent use of inexpensive sensor means 6 with analyzing means enables an automatic, timely and accurate detection of animal's nests. Use is made of the tendency animals have, when faced with danger, to stay in their nest as long as possible, in order to defend the nest, and fleeing only when the agricultural machine is already in the immediate vicinity of the nest. Therefore, the fleeing trajectory of the animal can be readily detected and analyzed. The timely and accurate detection of animal's nests enables an efficient prevention of damage to these nests. This is illustrated with reference to Figure 2, which illustrates the analysis of the fleeing trajectory of a bird fleeing from its nest in a field.

In Figure 2, a part of an image as registered by the camera 6 is schematically represented. The image comprises the field 7 and a shadow contour of the machine 8. Furthermore, a bird 9 is seen fleeing from its nest in the field 7, situated in front of the machine, near the path to be followed by the machine. The camera 6 is suitable for generating a sequence of such images, resulting in a number of consecutive positions of the bird 9 on its fleeing trajectory, as illustrated in Figure 2, wherein the consecutive positions of the bird 9 are all schematically included. This sequence of images, starting with the first image in which the bird 9 is (partly) detected, enables the analyzing means to track its fleeing trajectory and thus to estimate the position 10 of the bird's nest in the field 7, if necessary possibly with the aid of extrapolation techniques, known as such. A fairly accurate determination of the nest's position 10 in the field 7 is thus rendered possible.

In reaction to the determined position 10 of the nest, the control means can be configured to temporarily displace the working unit 3 of the machine. For example, if the nest is located centrally in front of a machine with a mowing unit 3, the machine can move on without touching the nest when the mowing unit 3 has been raised, provided of course that the machine has this possibility. This response constitutes an efficient and user-friendly way of avoiding damage to the nest. In the embodiment shown with reference to Figures 1 and 2, displacing the mowing unit 3 is not possible without displacing the whole machine.

Alternatively or additionally, the control means can be configured to temporarily stop the working unit. Certain agricultural machines can drive on without damaging the nest if the working unit is turned off, provided that the nest is not located exactly on the path to be followed by the wheels 2 of the machine. This is a further simple, yet effective implementation to save the nest, although not possible with the machine of Figure 1.

Alternatively or additionally, the control means are configured to stop the machine. In this way, appropriate action can be taken, for example by a driver of the machine, after an alarm has been generated. This is of course a very safe solution, applicable to every possible type of agricultural machine.

In the advantageous embodiment of Figures 1 and 2, the control means are configured to modify the path to be followed by the machine. Thus, damage to the nest is avoided in a completely automated way. The propulsion and steering means are controlled in such a way that the machine drives around the nest. Preferably, a certain minimum distance to the nest is observed, for maximum safety This is not only very safe and animal-friendly, but also user-friendly and efficient.

As an option, the machine can be provided with warning means for animals on or near the path to be followed by the machine. The warning means can be acoustical, in the form of an alarm sound, or optical, like a flashing light, for example. In this way, the safety for the animals is further enhanced.

Advantageously, the position 10 of the animal's nest determined by the sensor means 6 with analyzing means is stored in the control means. This is advantageous for future use. For example, the position may be taken into account for future runs of the agricultural machine in the same field 7.

In an embodiment, the machine is provided with marking means for marking the position 10 of the animal's nest determined by the sensor means 6 with analyzing means in the field 7. This is a simple, yet efficient measure to ensure the future safety of the nest. The marking means may comprise e.g. a paint sprayer.

Advantageously, the sensor means 6 with analyzing means are configured to determine which species of animal is fleeing. In this way, the action to be taken may be adapted to the animal species. For example, a heron does not make a nest in a field 7, so that in that case no action would be required. In that case, the control means are configured to influence the machine in dependence on the animal species fleeing. This improves the efficiency and reliability of the machine.

Although in the example shown the field 7 is a grass field, the invention may just as well be applied in a corn field or a wheat field. Also, the bird's nest is merely an example, but a hare's den may also be saved by means of the invention. Generally, the invention provides more safety for animals nesting in agricultural fields 7. Animal health and welfare are thus improved.

With relatively cheap means, damage to nests in an agricultural field 7 can be avoided either completely automatically (as shown with reference to the Figures) or with the aid of a driver or farmer, using alarms or attention signals generated by the control means based on information provided by the sensor means 6 with analyzing means.

### REFERENCE NUMERAL LIST

- 1: body
- 2: wheels
- 3: working unit
- 4: cover
- 5: unloading and dosing means
- 6: camera
- 7: field
- 8: machine shadow contour
- 9: animal
- 10: nest position

## Claims

1. Agricultural machine for use in a field (7), the machine being provided with propulsion and steering means, a working unit (3) and control means, said control means being connected to sensor means (6) with analyzing means for monitoring the path to be followed by the machine, wherein the sensor means (6) with analyzing means are configured to determine the position (10) of an animal's nest in the field (7) on or near the path to be followed by the machine, wherein the control means are configured to influence the machine, in response to the position (10) of the animal's nest determined by the sensor means (6) with analyzing means, in such a way that the animal's nest is not damaged, **characterised in that** the position of the animal's nest is determined by means of detecting an animal (9) fleeing from the nest in the field (7) and analyzing its fleeing trajectory.

2. Machine according to claim 1, wherein the control means are configured to temporarily displace the working unit (3).

3. Machine according to any one of claims 1 - 2, wherein the control means are configured to temporarily stop the working unit (3).

4. Machine according to any one of claims 1 - 3, wherein the control means are configured to stop the machine.

5. Machine according to any one of claims 1 - 4, wherein the control means are configured to modify the path to be followed by the machine.

6. Machine according to any one of claims 1 - 5, wherein the machine is provided with warning means for animals (9) on or near the path to be followed by the machine.

7. Machine according to any one of claims 1 - 6, wherein the position (10) of the animal's nest determined by the sensor means (6) with analyzing means is stored in the control means.

8. Machine according to any one of claims 1 - 7, wherein the machine is provided with marking means for marking the position (10) of the animal's nest determined by the sensor means (6) with analyzing means in the field.

9. Machine according to any one of claims 1 - 8, wherein the sensor means (6) with analyzing means are configured to determine which species of animal (9) is fleeing.

10. Machine according to claim 9, wherein the control means are configured to influence the machine in dependence on the animal species fleeing.

## Patentansprüche

1. Landwirtschaftliche Maschine zur Verwendung auf einem Feld (7), wobei die Maschine mit Antriebs- und Lenkeinrichtungen, einer Bewirtschaftungseinheit (3) und Steuereinrichtungen ausgestattet ist, wobei die Steuereinrichtungen mit Sensoreinrichtungen (6) mit Analysiereinrichtungen zum Überwachen des von der Maschine zurückzulegenden Wegs verbunden sind, wobei die Sensoreinrichtungen (6) mit Analysiereinrichtungen konfiguriert sind, um die Position (10) eines Nests eines Tiers auf dem Feld (7) auf oder nahe bei dem von der Maschine zurückzulegenden Weg zu bestimmen, wobei die Steuereinrichtungen konfiguriert sind, um als Reaktion darauf, dass die Position (10) des Nests des Tiers von den Sensoreinrichtungen (6) mit Analysiereinrichtungen bestimmt wird, die Maschine so zu beeinflussen, dass das Nest des Tiers nicht beschädigt wird, **dadurch gekennzeichnet, dass** die Position des Nests des Tiers durch Detektieren eines aus dem Nest auf dem Feld (7) fliehenden Tiers (9) und Analysieren seiner Fliehtrajektorie bestimmt wird.

2. Maschine nach Anspruch 1, wobei die Steuereinrichtungen konfiguriert sind, um die Bewirtschaftungseinheit (3) vorübergehend zu verstellen.

3. Maschine nach einem der Ansprüche 1-2, wobei die Steuereinrichtungen konfiguriert sind, um die Bewirtschaftungseinheit (3) vorübergehend zu stoppen.

4. Maschine nach einem der Ansprüche 1-3, wobei die Steuereinrichtungen konfiguriert sind, um die Maschine zu stoppen.

5. Maschine nach einem der Ansprüche 1-4, wobei die Steuereinrichtungen konfiguriert sind, um den von der Maschine zurückzulegenden Weg zu modifizieren.

6. Maschine nach einem der Ansprüche 1-5, wobei die Maschine mit Warneinrichtungen für Tiere (9) auf oder nahe bei dem von der Maschine zurückzulegenden Weg ausgestattet ist.

7. Maschine nach einem der Ansprüche 1-6, wobei die von den Sensoreinrichtungen (6) mit Analysiereinrichtungen bestimmte Position (10) des Nests des Tiers in den Steuereinrichtungen gespeichert wird.

8. Maschine nach einem der Ansprüche 1-7, wobei die Maschine mit Markierungseinrichtungen zum Markieren der von den Sensoreinrichtungen (6) mit Analysiereinrichtungen bestimmten Position (10) des Nests des Tiers auf dem Feld ausgestattet ist.

9. Maschine nach einem der Ansprüche 1-8, wobei die Sensoreinrichtungen (6) mit Analysiereinrichtungen konfiguriert sind, um zu bestimmen, welche Spezies eines Tiers (9) gerade flieht.

10. Maschine nach Anspruch 9, wobei die Steuereinrichtungen konfiguriert sind, um die Maschine in Abhängigkeit von der fliehenden Tierspezies zu beeinflussen.

## Revendications

1. Machine agricole destinée à être utilisée sur un terrain (7), la machine étant pourvue de moyens de propulsion et de direction, d'une unité de travail (3) et de moyens de commande, lesdits moyens de commande étant connectés à des moyens de capteur (6) avec des moyens d'analyse pour surveiller le chemin à suivre par la machine, les moyens de capteur (6) avec les moyens d'analyse étant configurés pour déterminer la position (10) d'un nid d'animal sur le terrain (7) sur ou près du chemin à suivre par la machine, les moyens de commande étant configurés pour influencer la machine, en réponse à la position (10) du nid d'animal déterminée par les moyens de capteur (6) avec les moyens d'analyse, de manière à ce que le nid d'animal ne soit pas endommagé, **caractérisée en ce que** la position du nid d'animal est déterminée par des moyens pour détecter un animal (9) fuyant du nid sur le terrain (7) et analyser sa trajectoire de fuite.

2. Machine selon la revendication 1, dans laquelle les moyens de commande sont configurés pour déplacer temporairement l'unité de travail (3).

3. Machine selon l'une quelconque des revendications 1 à 2, dans laquelle les moyens de commande sont configurés pour arrêter temporairement l'unité de travail (3).

4. Machine selon l'une quelconque des revendications 1 à 3, dans laquelle les moyens de commande sont configurés pour arrêter la machine.

5. Machine selon l'une quelconque des revendications 1 à 4, dans laquelle les moyens de commande sont configurés pour modifier le chemin à suivre par la machine.

6. Machine selon l'une quelconque des revendications 1 à 5, la machine contenant des moyens d'avertissement pour les animaux (9) sur ou près du chemin à suivre par la machine.

7. Machine selon l'une quelconque des revendications 1 à 6, dans laquelle la position (10) du nid d'animal déterminée par les moyens de capteur (6) avec les moyens d'analyse est stockée dans les moyens de commande.

8. Machine selon l'une quelconque des revendications 1 à 7, la machine étant pourvue de moyens de marquage pour marquer la position (10) du nid d'animal déterminée par les moyens de capteur (6) avec les moyens d'analyse sur le terrain.

9. Machine selon l'une quelconque des revendications 1 à 8, dans laquelle les moyens de capteur (6) avec les moyens d'analyse sont configurés pour déterminer quelle espèce d'animal (9) est en fuite.

10. Machine selon la revendication 9, dans laquelle les moyens de commande sont configurés pour influencer la machine en fonction de l'espèce d'animal en fuite.
